# FASCICULE DE BREVET EUROPEEN

(11) **EP 1 979 591 B1**
(45) Date de publication et mention de la délivrance du brevet: **23.05.2012**
(21) Numéro de dépôt: 07730867.4
(22) Date de dépôt: 26.01.2007
(51) Int. Cl.: F02B 75/04, F01B 9/04

(54) **DISPOSITIF PRESSEUR POUR MOTEUR A RAPPORT VOLUMETRIQUE VARIABLE**
DRUCKVORRICHTUNG FÜR EINEN MOTOR MIT VARIABLER VERDICHTUNG
PRESSURE DEVICE FOR A VARIABLE COMPRESSION RATIO ENGINE

(30) Priorité: 26.01.2006 FR 0600714; 30.01.2006 US 762870 P
(43) Date de publication de la demande: 15.10.2008
(73) Titulaire: Rabhi, Vianney, 69006 Lyon (FR)
(72) Inventeur: Rabhi, Vianney, 69006 Lyon (FR)
(74) Mandataire: Schmitt, John
(86) Numéro de dépôt international: PCT/FR2007/000149
(87) Numéro de publication internationale: WO 2007/085739

(56) Documents cités:
- WO-A-2005/098219
- WO-A1-03/008783
- FR-A1- 2 763 097
- FR-A1- 2 786 530

## Description

La présente invention est relative à un dispositif presseur qui maintient les pistes de roulement des principaux composants mobiles d'un moteur à rapport volumétrique variable en permanence en contact entre elles ainsi qu'avec les faces sur lesquelles elles prennent appui dans le carter cylindre.

On connaît, d'après les brevets internationaux WO98/51911, WO00/31377, WO03/008783 appartenant au demandeur, différents dispositifs mécaniques pour moteur à rapport volumétrique variable.

On remarque que le brevet international WO98/51911 au nom du demandeur décrit un dispositif servant à améliorer le rendement global des moteurs à combustion interne à pistons utilisés à charge et régime variables par adaptation en marche de leur cylindrée effective et/ou de leur rapport volumétrique.

On constate que selon les brevets internationaux WO00/31377 et WO03/008783 au nom du demandeur le dispositif de transmission mécanique pour moteur à rapport volumétrique variable comprend au moins un cylindre dans lequel se déplace un piston qui est solidaire, dans sa partie inférieure, d'un organe de transmission coopérant d'une part au moyen d'une crémaillère de faible dimension avec un dispositif de guidage à roulement, et d'autre part au moyen d'une autre crémaillère de forte dimension avec une roue dentée solidaire d'une bielle, ceci permettant de réaliser la transmission du mouvement entre ledit piston et ladite bielle. Un autre dispositif de réglage est décrit dans le brevet international WO 2005 098 219.

Ledit dispositif de transmission mécanique pour moteur à rapport volumétrique variable comprend également au moins une crémaillère de commande coopérant avec la roue dentée, des moyens de fixation du piston sur l'organe de transmission qui offrent une précontrainte de serrage, des moyens de liaison qui permettent de rigidifier les dents des crémaillères, et des moyens de renforcement et d'allègement de la structure de la roue dentée.

On note que le jeu minimal de fonctionnement entre les dentures des crémaillères de forte dimension et celles de la roue dentée est fixé par la localisation de pistes de roulement réalisée sur lesdites crémaillères de forte dimension et sur ladite roue dentée.

On note aussi que le jeu maximal de fonctionnement entre les dentures des crémaillères de forte dimension et celles de la roue dentée est fixé par l'écart entre d'une part la somme des dimensions selon un axe horizontal des différents composants mobiles du moteur à rapport volumétrique variable que sont un rouleau synchronisé faisant partie du dispositif de guidage à roulement, la roue dentée, l'organe de transmission solidaire du piston et la crémaillère de commande, et d'autre part la distance entre les surfaces internes du carter-cylindre sur lesquelles viennent prendre appui, d'un coté du moteur, le rouleau synchronisé, et de l'autre coté du moteur, la crémaillère de commande.

Le réglage du jeu maximal de fonctionnement entre les dentures des crémaillères de forte dimension et les dentures de la roue dentée peut s'opérer de différentes façons qui toutes présentent l'inconvénient de nécessiter une précision élevée de réalisation du carter-cylindre et/ou de cales de réglages.

Cette précision élevée est nécessaire pour obtenir un jeu maximal de fonctionnement le plus faible possible entre les différentes pistes de roulement des composants mobiles du moteur afin que soit obtenu un jeu maximal de fonctionnement le plus faible possible entre les dentures des crémaillères de forte dimension et celles de la roue dentée. Obtenir ledit jeu maximal de fonctionnement le plus faible possible est nécessaire pour limiter les émissions acoustiques du moteur qui proviennent notamment du jeu entre les dents de la roue dentée et les dents des crémaillères avec lesquelles coopère ladite roue dentée, ce dernier jeu générant du battement.

Egalement, une précision élevée est requise pour la réalisation du carter-cylindre et/ou des cales de réglages afin de limiter au maximum les défauts de parallélisme entre les différentes surfaces fonctionnelles internes dudit carter-cylindre. Lesdits défauts de parallélisme peuvent en effet conduire au coincement des composants mobiles à l'intérieur dudit carter-cylindre lorsque le moteur est en fonctionnement.

En plus d'assurer une précision élevée au carter-cylindre et/ou aux cales de réglage pour limiter les émissions acoustiques du moteur et éviter tout coincement des composants mobiles, il faut aussi garantir que les écarts de température existants entre ledit carter-cylindre et les composants mobiles du moteur ne conduisent ni à des jeux trop élevés qui peuvent augmenter les émissions acoustiques, ni à des jeux nuls ou négatifs qui peuvent détruire le moteur.

En effet, les écarts de température peuvent conduire à une dilatation des composants mobiles différente de celle du carter-cylindre et donc à des variations négatives ou positives du jeu de fonctionnement du moteur.

Des écarts de température importants peuvent également apparaître en fonctionnement entre les parties hautes et basses du carter-cylindre. Ces écarts peuvent modifier l'orientation de la surface solidaire du carter-cylindre sur laquelle roule le rouleau synchronisé. De ce fait, le jeu maximal de fonctionnement entre les différentes pistes de roulement des composants mobiles du moteur peut varier pendant la course du piston.

Une autre difficulté de réalisation provient de la nécessité de réduire au maximum le jeu fonctionnel entre le piston de vérin qui actionne la crémaillère de commande et son alésage afin de limiter les émissions acoustiques du moteur. En effet, le piston de vérin vient cycliquement prendre appui de part et d'autre de son alésage à cause du basculement de la crémaillère qui a lieu sous l'action de la poussée des dentures alternativement au-dessus et au-dessous du point d'appui de ladite crémaillère de commande sur le carter-cylindre, ledit point d'appui étant matérialisé par exemple par une liaison rotule comme cela a été décrit dans la demande de brevet internationale PCT/FR05/00584 appartenant au demandeur.

On note d'autre part un autre défaut relatif à la manoeuvre de la crémaillère de commande par le vérin de commande : ladite manoeuvre s'effectue moins rapidement pour augmenter le rapport volumétrique que pour le baisser. Ceci est dû au fait que la réduction du rapport volumétrique s'effectue en utilisant les efforts élevés appliqués au vérin de commande par la détente des gaz, tandis que l'augmentation du rapport volumétrique s'effectue en utilisant les efforts de moindre intensité générés par l'inertie des pièces du moteur soumises à un mouvement alternatif.

C'est pour réduire de façon significative le niveau acoustique et pour améliorer l'efficacité du réglage du taux de compression du moteur à rapport volumétrique variable et faciliter la fabrication du carter-cylindre que le dispositif presseur suivant l'invention se distingue de l'art antérieur en ce que, selon un mode particulier de réalisation :
- Les tolérances de fabrication du carter-cylindre sont augmentées ce qui réduit son coût de fabrication ;
- Le jeu entre les pistes de roulement du dispositif de guidage à roulement, de la roue dentée, de l'organe de transmission solidaire du piston et de la crémaillère de commande; ainsi que le jeu entre les composants mobiles et leur face d'appui sur le carter-cylindre reste toujours nul quelles que soient les conditions de fonctionnement du moteur, ceci ayant pour effet de limiter le jeu maximal entre les dents du système d'engrenage du moteur et les émissions acoustiques qui en résultent ;
- Les risques de jeu négatif entre les composants mobiles du moteur et le carter-cylindre pouvant conduire à la destruction du moteur sont éliminés ;
- Les émissions acoustiques provenant du fait que le piston du vérin entre cycliquement en contact avec son alésage consécutivement au basculement de la crémaillère de commande sont éliminées ;
- La vitesse de déplacement de la crémaillère de commande dans le sens de l'augmentation du rapport volumétrique est augmentée.

Le dispositif presseur suivant la présente invention maintenant les pistes de roulement des principaux composants mobiles d'un moteur à rapport volumétrique variable en permanence en contact entre elles ainsi qu'avec les faces sur lesquelles elles prennent appui dans un carter cylindre comprend des moyens de pression solidaires du carter cylindre, qui exercent un effort de pression sur une crémaillère de commande comportant un secteur denté et en ce que l'effort de pression est appliqué sur une surface d'appui aménagée sur ladite crémaillère en sa partie inférieure.

Le dispositif presseur suivant la présente invention comprend une surface d'appui aménagée sur la crémaillère de commande en sa partie inférieure qui est placée suffisamment bas pour que l'effort résultant de l'effort tangentiel appliqué à la roue dentée par l'organe de transmission et de l'angle de pression des dentures d'une part, et des pistes de roulement d'autre part, soit toujours situé au-dessus d'un point d'appui (P) des moyens de pression.

Le dispositif presseur suivant la présente invention comprend des moyens de pression qui sont constitués d'un ressort hélicoïdal logé dans la paroi interne du bloc-moteur.

Le dispositif presseur suivant la présente invention comprend des moyens de pression qui sont constitués d'au moins une rondelle « Belleville » logée dans la paroi interne du bloc-moteur.

Le dispositif presseur suivant la présente invention comprend des moyens de pression qui sont constitués d'un vérin presseur hydraulique logé dans la paroi interne du bloc-moteur.

Le dispositif presseur suivant la présente invention comprend un vérin presseur hydraulique qui est une capsule hydraulique étanche constituée d'une membrane souple.

Le dispositif presseur suivant la présente invention comprend un vérin presseur hydraulique qui comporte un piston évoluant dans un cylindre directement usiné dans le carter cylindre.

Le dispositif presseur suivant la présente invention comprend un vérin presseur hydraulique qui comporte un piston évoluant dans une chemise cylindrique rapportée dans le carter cylindre.

Le dispositif presseur suivant la présente invention comprend un fond du cylindre du vérin presseur hydraulique qui est constitué par le carter cylindre.

Le dispositif presseur suivant la présente invention comprend un fond du cylindre du vérin presseur hydraulique qui est un composant rapporté vissé par l'extérieur du carter cylindre dans ledit le carter cylindre.

Le dispositif presseur suivant la présente invention comprend des chambres à huile dans les différents vérins presseurs hydrauliques que comporte le moteur qui sont reliées entre elles par des conduits réalisés dans la masse du carter cylindre.

Le dispositif presseur suivant la présente invention comprend une pression dans le vérin presseur hydraulique qui est asservie aux conditions de fonctionnement du moteur au moyen d'une centrale hydraulique.

Le dispositif presseur suivant la présente invention comprend une centrale hydraulique qui est un ensemble autonome et indépendant pouvant être installé en un point quelconque du compartiment moteur du véhicule et qui est relié au moteur par au moins un conduit hydraulique souple.

Le dispositif presseur suivant la présente invention comprend une centrale hydraulique comportant au moins une pompe hydraulique.

Le dispositif presseur suivant la présente invention comprend une centrale hydraulique comportant au moins un accumulateur de pression.

Le dispositif presseur suivant la présente invention comprend une centrale hydraulique comportant au moins une vanne électro-hydraulique.

Le dispositif presseur suivant la présente invention comprend une centrale hydraulique comportant au moins une sonde permettant de mesurer la pression.

Le dispositif presseur suivant la présente invention comprend une centrale hydraulique comportant au moins un contacteur asservi à la pression.

Le dispositif presseur suivant la présente invention comprend une centrale hydraulique comportant au moins un détendeur hydraulique.

Le dispositif presseur suivant la présente invention comprend une centrale hydraulique comportant au moins un filtre à huile.

Le dispositif presseur suivant la présente invention comprend une centrale hydraulique qui est alimentée avec de l'huile provenant du circuit de lubrification du moteur.

Le dispositif presseur suivant la présente invention comprend une centrale hydraulique comportant un accumulateur principal alimenté par la pompe hydraulique et qui constitue une réserve d'huile sous haute pression.

Le dispositif presseur suivant la présente invention comprend une centrale hydraulique comportant un accumulateur d'asservissement qui est relié au vérin presseur hydraulique et dont la pression moyenne est asservie aux conditions de fonctionnement du moteur.

Le dispositif presseur suivant la présente invention comprend une crémaillère de commande dont la position verticale par rapport au bloc moteur est pilotée par un dispositif de contrôle comportant un vérin de commande constitué d'une tige supérieure de vérin, d'une tige inférieure de vérin, d'un piston de vérin et d'une tige de contrôle.

Le dispositif presseur suivant la présente invention comprend une centrale hydraulique comportant un accumulateur de compensation de fuites qui est relié à un clapet anti-retour du vérin de commande, ledit clapet autorisant l'entrée du fluide hydraulique dans le corps du vérin de commande.

Le dispositif presseur suivant la présente invention comprend un clapet anti-retour du vérin de commande qui est placé au centre de la tige supérieure dudit vérin, l'entrée dudit clapet anti-retour étant en communication avec une chambre aménagée dans une culasse dudit vérin de commande et dans le prolongement de la tige supérieure, ladite chambre étant reliée à l'accumulateur de compensation de fuites par un conduit et la sortie dudit clapet anti-retour étant reliée à un autre conduit aménagé dans le piston de vérin du vérin de commande par lequel la tige de contrôle traverse ledit piston.

Le dispositif presseur suivant la présente invention comprend différentes chambres aménagées dans la culasse des vérins de commande d'un même moteur et dans le prolongement des tiges supérieures de vérin, qui sont reliées entre elles par des conduits réalisés dans la masse de ladite culasse.

Le dispositif presseur suivant la présente invention comprend une chambre aménagée dans la culasse du vérin de commande et dans le prolongement de la tige supérieure de vérin, qui est reliée à une autre chambre réalisée au-dessus de la tige de contrôle et dans ladite culasse par l'intermédiaire d'un conduit aménagé dans la masse de ladite culasse.

Le dispositif presseur suivant la présente invention comprend un piston de vérin du vérin de commande comportant une bague dont la surface intérieure épouse la forme sphérique dudit piston de vérin et dont la surface extérieure est cylindrique.

Le dispositif presseur suivant la présente invention comprend des moyens de pression solidaires du carter cylindre qui exercent un effort de pression sur la crémaillère de commande par l'intermédiaire d'une rotule d'appui par laquelle s'exerce l'effort de pression qui est appliqué sur la surface d'appui aménagée sur ladite crémaillère en sa partie inférieure.

Le dispositif presseur suivant la présente invention comprend des moyens de pression solidaires du carter cylindre qui comportent une butée réglable qui permet de régler le jeu maximal entre les pistes de roulement des principaux composants mobiles du moteur.

Le dispositif presseur suivant la présente invention comprend une butée réglable qui est une pièce vissée dans le carter cylindre et arrêtée en rotation.

Le dispositif presseur suivant la présente invention comprend une pompe hydraulique qui est une pompe à piston radial unique comportant un piston actionné en translation selon son axe longitudinal dans une direction par un excentrique d'entraînement de pompe et dans l'autre direction par un ressort de rappel.

Le dispositif presseur suivant la présente invention comprend un excentrique d'entraînement de pompe qui est aménagé à l'extrémité de l'un des arbres à cames qui assurent l'ouverture et la fermeture des soupapes du moteur.

Le dispositif presseur suivant la présente invention comprend un excentrique d'entraînement de pompe qui comporte un roulement à billes ou à rouleau dont la cage intérieure est montée sur ledit excentrique et dont la cage extérieure est en contact directement ou indirectement avec l'extrémité du piston de la pompe.

Le dispositif presseur suivant la présente invention comprend un excentrique d'entraînement de pompe qui agit sur le piston de la pompe par l'intermédiaire d'un poussoir logé dans un alésage.

Le dispositif presseur suivant la présente invention comprend une pompe à piston radial unique qui comporte une chambre de pompe communiquant d'une première part avec la sortie d'un clapet anti-retour d'admission dont l'entrée est reliée au circuit de lubrification sous pression du moteur, d'une seconde part avec l'entrée d'un clapet anti-retour de refoulement dont la sortie est reliée à l'accumulateur principal et d'une troisième part avec le circuit de lubrification sous pression du moteur par l'intermédiaire d'un conduit qui peut être obturé par un distributeur de décharge.

Le dispositif presseur suivant la présente invention comprend un distributeur de décharge qui comporte au moins une gorge de passage du fluide et qui peut se déplacer dans un alésage selon son axe longitudinal, de manière que l'une des extrémités dudit distributeur coopère avec un ressort qui tend à maintenir ledit distributeur en position fermée, tandis que l'autre extrémité dudit distributeur coopère avec une tige de transmission de pression qui tend à maintenir ledit distributeur en position ouverte en exerçant un effort sur ledit distributeur, ledit effort étant proportionnel à la pression régnant dans l'accumulateur principal.

Le dispositif presseur suivant la présente invention comprend une tige de transmission de pression qui comporte une première extrémité qui est en contact avec le distributeur de décharge et tend à le maintenir en position ouverte tandis que la seconde extrémité débouche dans une chambre de pression reliée à l'accumulateur principal au moyen d'un conduit.

Le dispositif presseur suivant la présente invention comprend un distributeur de décharge qui comporte un dispositif de verrouillage coopérant avec deux gorges de verrouillage permettant respectivement de maintenir ledit distributeur en position pleinement ouverte ou pleinement fermée, ledit dispositif de verrouillage étant maintenu dans l'une ou l'autre desdites gorges par un ressort de verrouillage.

La description qui va suivre en regard des dessins annexés, donnés à titre d'exemples non limitatifs, permettra de mieux comprendre l'invention, les caractéristiques qu'elle présente et les avantages qu'elle est susceptible de procurer:
Figure 1 est une vue en coupe schématique illustrant les pistes de roulement des principaux composants mobiles d'un moteur à rapport volumétrique variable dans son carter cylindre.
Figure 2 est une vue en coupe représentant le dispositif de contrôle du moteur à rapport volumétrique variable dans son carter cylindre.
Figure 3 est une vue en perspective éclatée montrant l'agencement du piston de vérin du dispositif de contrôle avec la crémaillère de commande du moteur à rapport volumétrique variable dans son carter cylindre.
Figure 4 est une vue illustrant le schéma de principe de la centrale hydraulique destinée à piloter le dispositif presseur du moteur à rapport volumétrique variable dans son carter cylindre.
Figure 5 est une vue représentant un exemple de réalisation de la pompe hydraulique de la centrale hydraulique destinée à piloter le dispositif presseur du moteur à rapport volumétrique variable dans son carter cylindre.

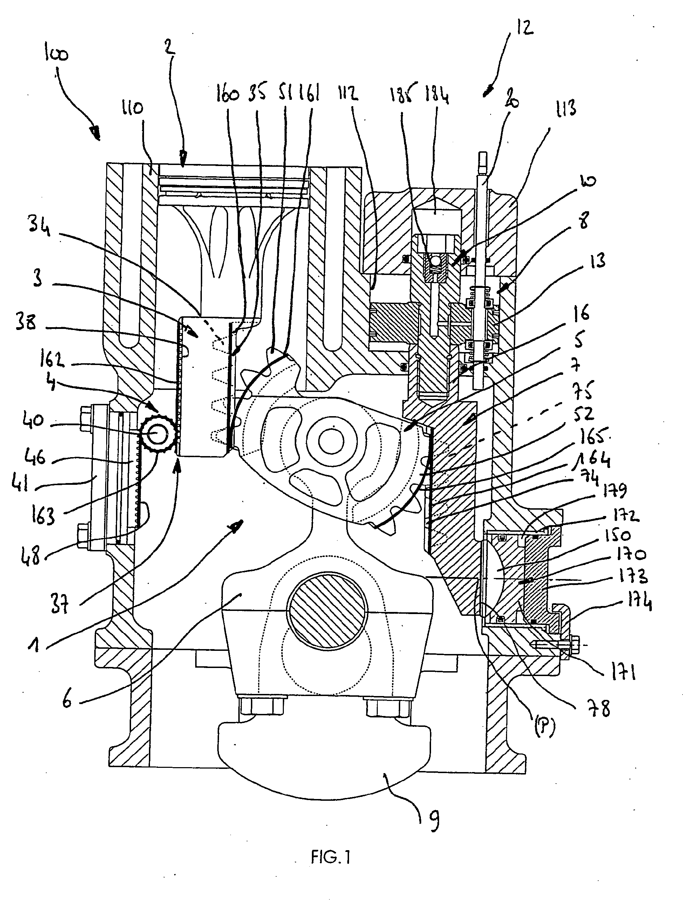

On a montré en figure 1 un bloc moteur 100 qui comprend au moins un cylindre 110 dans lequel se déplace un piston 2 au moyen d'un dispositif de transmission 1 et des moyens de pression qui permettent de maintenir en position les principaux composants mobiles d'un moteur à rapport volumétrique variable dans leur carter cylindre.

Le dispositif de transmission mécanique 1 comporte dans la partie inférieure du piston 2 un organe de transmission 3 solidaire dudit piston et coopérant, d'une part avec un dispositif de guidage à roulement 4, et d'autre part avec une roue dentée 5.

La roue dentée 5 coopère avec une bielle 6 reliée à un vilebrequin 9 afin de réaliser la transmission du mouvement entre le piston 2 et ledit vilebrequin.

La roue dentée 5 coopère à l'opposé de l'organe de transmission 3 avec une autre crémaillère dite crémaillère de commande 7 dont la position verticale par rapport au bloc moteur 100 est pilotée par un dispositif de contrôle 12 comportant un vérin de commande 8, dont le piston de vérin 13 est guidé dans un cylindre de vérin 112 aménagé dans le bloc moteur 100.

Le cylindre de vérin 112 est fermé dans sa partie supérieure par une culasse de vérin 113 qui est vissée sur le bloc moteur 100. Il peut être prévue une culasse 113 par cylindre de vérin 112 ou une culasse 113 commune à l'ensemble des cylindres de vérin 112 d'un moteur multi-cylindres.

L'organe de transmission 3 solidaire du piston 2 est pourvu sur l'une de ses faces d'une crémaillère de forte dimension 35 dont les dents 34 coopèrent avec celles 51 de la roue dentée 5, une première piste de roulement 160 étant aménagée sur la première crémaillère de forte dimension 35 de l'organe de transmission 3, tandis qu'une seconde piste de roulement 161 est aménagée sur la roue dentée 5.

L'organe de transmission 3 comporte, à l'opposé de la crémaillère de forte dimension 35, une autre crémaillère 37 dont les dents 38 de faible dimension coopèrent avec celles d'un rouleau 40 du dispositif de guidage à roulement 4, ledit organe de transmission 3 comportant également une seconde piste de roulement 162, au niveau de ladite crémaillère 37, qui coopère avec une piste de roulement 163 aménagée sur le rouleau 40.

Le bloc moteur 100 est solidaire d'un support 41 comportant des crémaillères 46 assurant la synchronisation du déplacement du rouleau 40 avec celui du piston 2, et une piste de roulement 48 coopérant avec celle 163 du rouleau 40.

La crémaillère de commande 7, dont la position verticale par rapport au bloc moteur 100, est pilotée par un dispositif de contrôle 12 comportant un vérin de commande 8 qui est constitué d'une tige supérieure de vérin 10, d'une tige inférieure de vérin 16, d'un piston de vérin 13 et d'une tige de contrôle 20.

La crémaillère de commande 7 comporte des dents 74 qui coopèrent avec celles 52 de la roue dentée 5 et une piste de roulement 164 qui coopère avec sur une piste de roulement 165 que comporte la roue dentée 5.

La crémaillère de commande 7 comporte en sa partie inférieure et en dessous du secteur denté 75 constitué de dents 74 une surface d'appui 78 qui est placée suffisamment bas pour que l'effort résultant d'une part, de l'effort tangentiel appliqué à la roue dentée 5 par l'organe de transmission 3 et de l'angle de pression des dentures 34, 74, 51, 52 et d'autre part de l'effort exercé par les pistes de roulement 164 et 165 soit toujours situé au-dessus d'un point d'appui P des moyens de pression.

Les moyens de pression solidaires du carter cylindre 100 exercent un effort de pression sur la crémaillère de commande 7 par l'intermédiaire d'une rotule d'appui 150 par laquelle s'exerce l'effort de pression qui est appliqué sur la surface d'appui 78 aménagée sur ladite crémaillère 7 en sa partie inférieure.

Les moyens de pression solidaires du carter cylindre 100 peuvent comporter une butée réglable qui permet de régler le jeu maximal entre les pistes de roulement 48, 160 à 165 des principaux composants mobiles 3, 5, 7 et 40 du moteur.

La butée réglable peut être une pièce qui est vissée et arrêtée en rotation dans le carter cylindre 100. La butée réglable peut être arrêtée en rotation, par exemple, soit par contre-écrou, soit par collage, soit par clavetage ou soit par un frein de type « Nylstop ».

Les moyens de pression peuvent être constitués d'un ressort hélicoïdal logé dans la paroi interne du bloc-moteur 100.

Les moyens de pression peuvent être constitués d'au moins une rondelle « Belleville » logée dans la paroi interne du bloc-moteur 100.

Les moyens de pression peuvent être constitués d'un vérin presseur hydraulique 170 logé dans la paroi interne du bloc-moteur 100.

Le vérin presseur hydraulique 170 peut être une capsule hydraulique étanche constituée d'une membrane souple.

Le vérin presseur hydraulique 170 peut comporter un piston 171 évoluant dans un cylindre directement usiné dans le carter cylindre 100.

Le vérin presseur hydraulique 170 comporte un piston 171 évoluant dans une chemise cylindrique 172 rapportée dans le carter cylindre 100.

Le fond de cylindre du vérin presseur hydraulique 170 peut être constitué par le carter cylindre 100.

Le fond de cylindre du vérin presseur hydraulique 170 est un composant 173 qui est rapporté vissé par l'extérieur du carter cylindre 100 et dans ledit carter cylindre 100.

Selon un mode particulier de réalisation, le fond de cylindre 173 du vérin presseur hydraulique 170 constitue une butée réglable qui permet de régler le jeu maximal entre les pistes de roulement 48, 160 à 165 des principaux composants mobiles 3, 5, 7 et 40 du moteur, ledit fond de cylindre 173 étant alors arrêté en rotation dans le carter cylindre 100 par des moyens d'arrêt.

Les moyens d'arrêt peuvent être constitués d'une pièce 174 qui coopère avec le fond de cylindre 173 et qui est vissée dans le carter cylindre 100.

Les différents vérins presseurs hydrauliques 170, que comporte le moteur, présentent des chambres 179 qui sont reliées entre elles par des conduits réalisés dans la masse du carter cylindre 100.

La pression régnant dans chaque vérin presseur hydraulique 170 est asservie aux conditions de fonctionnement du moteur au moyen d'une centrale hydraulique 200.

La centrale hydraulique 200 est un ensemble autonome et indépendant pouvant être installé soit à l'intérieur du bloc moteur 100, soit en un point quelconque du compartiment moteur du véhicule et reliée au moteur par au moins un conduit hydraulique souple. Selon une variante de réalisation, les différents composants de la centrale hydraulique 200 peuvent être tout ou en partie logés dans le carter d'huile du moteur ou répartis en différents endroits à l'intérieur ou à l'extérieur dudit moteur.

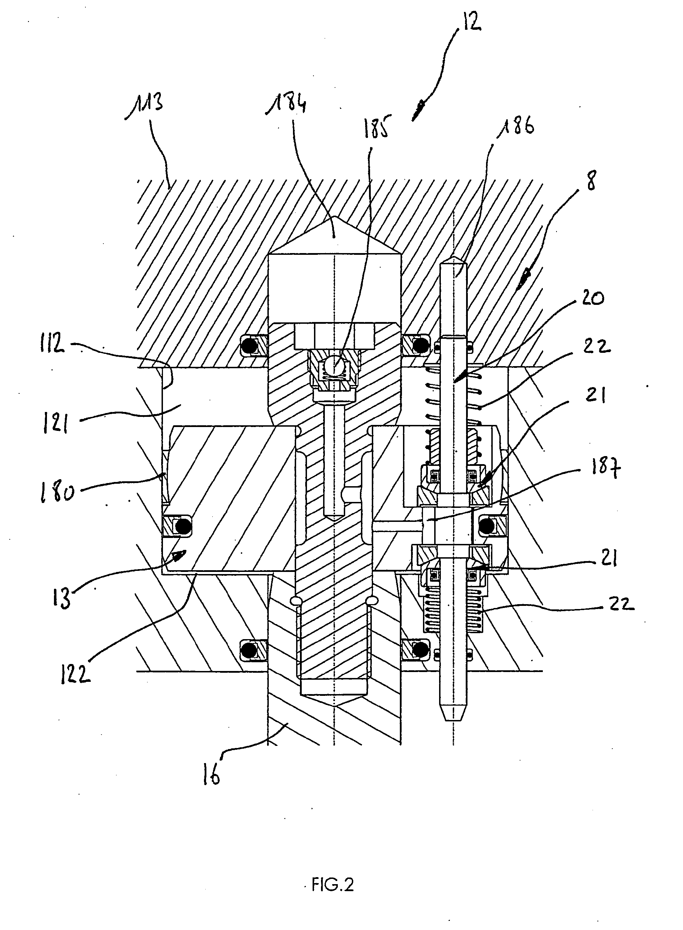

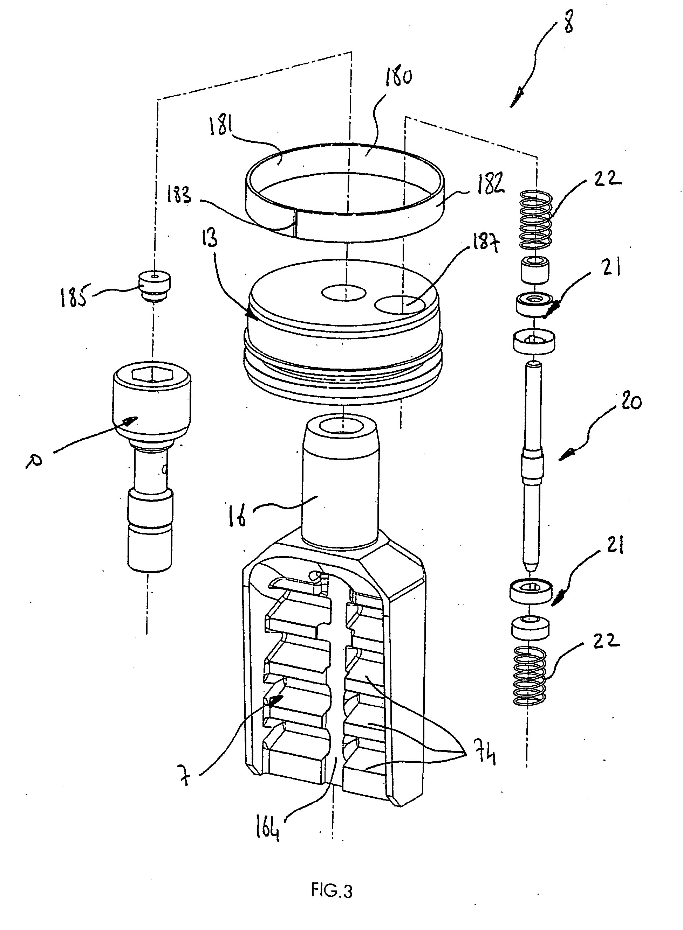

On a représenté en figures 2 et 3 le dispositif de contrôle 12 du moteur à rapport volumétrique variable dont la tige supérieure de vérin 10 du vérin de commande 8 coopère avec la tige inférieure de vérin 16 de la crémaillère de commande 7.

Le piston de vérin 13 comporte une bague de rotulage 180 dont la surface intérieure 181 épouse la forme sphérique dudit piston de vérin, tandis que ladite bague présente une surface extérieure 182 présentant un profil cylindrique.

La bague de rotulage 180 comporte une coupe 183 pour faciliter le montage de ladite bague autour du piston de vérin 13.

La tige supérieure de vérin 10 du vérin de commande 8 coopère dans son prolongement et de manière étanche avec une chambre 184 aménagée dans la culasse 113 du cylindre de vérin 112 de chaque dispositif de commande 12 du moteur.

La chambre 184 aménagée dans la culasse 113 peut être reliée à une autre chambre 186 réalisée dans la masse de la culasse 113 et au-dessus de la tige de contrôle 20 du vérin de commande 8 par l'intermédiaire d'un conduit percé dans la masse de ladite culasse 113.

La tige supérieure de vérin 10 peut comporter dans sa partie interne et en son centre un clapet anti-retour 185 de compensation des fuites dont l'entrée est en communication avec la chambre 184 aménagée dans la culasse 113 du vérin de commande 8, tandis que la sortie dudit clapet anti-retour 185 est reliée à un conduit 187, ménagé dans le piston de vérin 13 du vérin de commande 8.

La chambre 184 est reliée à un accumulateur de compensation de fuites 209 d'une centrale hydraulique 200.

Le conduit 187 communique au niveau de la tige de contrôle 20, par l'intermédiaire de valves 21 maintenus sur leur siège par un ressort 22, soit avec une chambre supérieure 121, soit avec une chambre inférieure 122 du vérin de commande 8, se trouvant respectivement au-dessus et en dessous du piston de vérin 13.

Les différentes chambres 184 aménagées dans la culasse 113 des vérins de commande 8 d'un même moteur et dans le prolongement des tiges supérieures de vérin 10 desdits vérins sont reliées entre elles par des conduits réalisés dans la masse de la culasse 113.

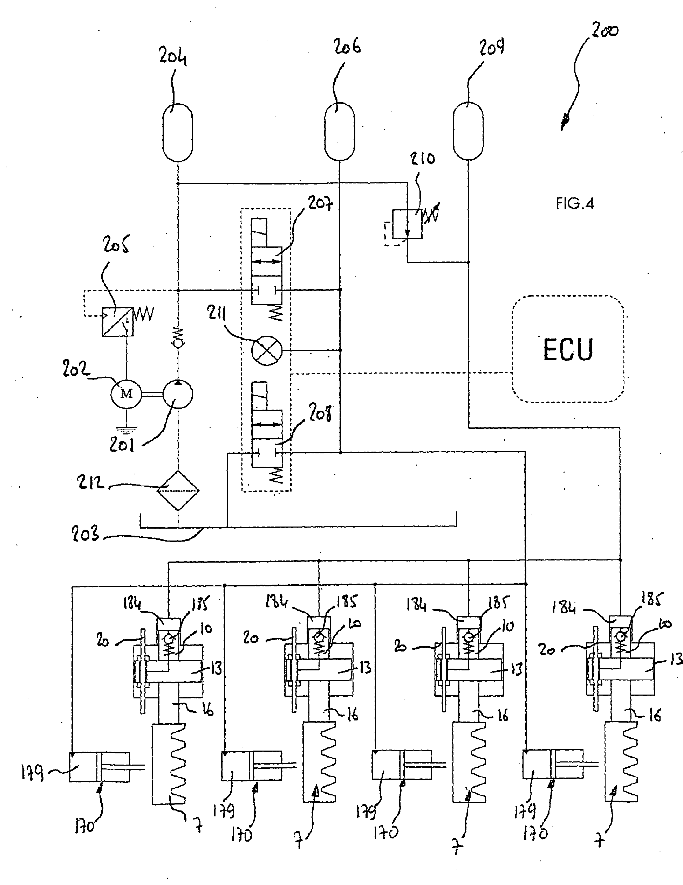

On a montré en figure 4 un schéma illustrant une centrale hydraulique 200 permettant de maintenir une pression hydraulique dans chaque vérin presseur hydraulique 170 du dispositif presseur suivant la présente invention.

La centrale hydraulique 200 comporte une pompe hydraulique 201 mue par un moteur électrique 202 qui aspire de l'huile dans le carter d'huile 203 de lubrification du moteur et la refoule dans un accumulateur principal 204 afin de maintenir en permanence une réserve d'huile sous haute pression.

La mise sous tension du moteur électrique 202, qui entraîne la pompe hydraulique 201, est réalisée au moyen d'un contacteur 205, connu en soi, asservi à la pression qui règne dans l'accumulateur principal 204.

La pompe hydraulique 201 peut être, par exemple, entraînée par le moteur thermique par l'intermédiaire de moyens de transmission, ou par un moteur électrique rotatif ou linéaire. La pompe hydraulique 201 peut être à palette, à engrenage, à pistons radiaux ou à pistons axiaux.

Le contacteur 205 est prévu pour mettre le moteur électrique 202 sous tension en dessous d'une certaine pression, dite « pression minimale », et pour mettre ledit moteur électrique 202 hors tension au-dessus d'une certaine pression, dite « pression maximale », de sorte que la pression régnant dans l'accumulateur principal 204 reste toujours comprise entre deux valeurs prédéterminées.

Les chambres 179 respectives des différents vérins presseurs hydrauliques 170 du moteur sont communément connectées à un accumulateur d'asservissement 206 de sorte que la pression régnant dans ledit accumulateur d'asservissement 206 est identique à celle régnant dans les chambres 179 desdits vérins presseurs hydrauliques 170.

La pression minimale requise dans les chambres 179 des vérins presseurs hydrauliques 170, pour maintenir les pistes de roulement 48, 160 à 165 des principaux composants mobiles 3, 5, 7, et 40 du moteur en permanence en contact entre elles ainsi qu'avec les faces sur lesquelles elles prennent appui dans le bloc moteur 100, est variable en fonction des conditions de fonctionnement dudit moteur, c'est-à-dire, en fonction de la charge et du régime dudit moteur.

Pour réduire les frottements et l'usure du moteur, il est avantageux de prévoir une pression dans les chambres 179 des vérins presseurs hydrauliques 170 qui soit proche de la pression minimale requise tout en restant toujours au moins égale ou supérieure à celle-ci.

Pour cette raison, la pression qui règne dans l'accumulateur d'asservissement 206 est réglée par un système de gestion du moteur ECU en fonction des conditions de fonctionnement dudit moteur via la centrale hydraulique 200.

A cet effet, le système de gestion du moteur ECU calcule en permanence la valeur de pression requise pour l'accumulateur d'asservissement 206 en fonction de la charge et du régime dudit moteur.

Tenant compte des conditions de fonctionnement du moteur, si la pression, dont la valeur est transmise au système de gestion du moteur ECU par une sonde de pression 211, dans l'accumulateur d'asservissement 206, est trop faible, une vanne hydraulique de charge 207 transfère de l'huile haute pression depuis l'accumulateur principal 204 vers l'accumulateur d'asservissement jusqu'à ce que la pression dudit accumulateur d'asservissement 206 soit haussée à la valeur recherchée.

Si la pression dans l'accumulateur d'asservissement 206 est trop élevée, une vanne hydraulique de décharge 208 transfère de l'huile depuis l'accumulateur d'asservissement 206 vers le carter d'huile 203 de lubrification du moteur jusqu'à ce que la pression dudit accumulateur d'asservissement 206 soit baissée à la valeur recherchée. Lorsque le moteur fonctionne à charge et régime stabilisés, les vannes de charge 207 et de décharge 208 restent fermées.

La centrale hydraulique 200 comporte au moins un filtre à huile 212 placé en entrée ou en sortie de la pompe hydraulique 201.

La raideur de l'accumulateur d'asservissement 206, c'est-à-dire sa variation de pression en fonction de la variation du volume de l'huile qu'il contient, est calculée de sorte que les défauts géométriques du moteur qui engendrent une variation cyclique du volume des chambres 179 des vérins presseurs hydraulique 170 ne fassent osciller la pression dans l'accumulateur d'asservissement 206 que dans des limites raisonnables.

Une autre fonction de la centrale hydraulique 200 est de maintenir une pression dite « de gavage » à l'entrée du clapet anti-retour 185 des vérins de commande 8 afin de compenser toute perte de fluide hydraulique desdits vérins de commande 8 due à des fuites d'une part, et afin de maintenir une pression minimale de fonctionnement dans lesdits vérins de commande 8 d'autre part.

La pression minimale de fonctionnement est nécessaire pour réduire les effets de la compressibilité de l'huile nuisible à la précision des vérins de commande 8 d'une part, et pour éviter tout phénomène de cavitation générateur de bruit et de destruction des composants internes desdits vérins d'autre part.

Pour cela, la centrale hydraulique 200 comporte un accumulateur de compensation de fuites 209 connecté avec l'entrée du clapet anti-retour 185 des vérins de commande 8.

La pression de l'accumulateur de compensation de fuites 209 est grandement inférieure à celle de l'accumulateur principal 204 et est constamment maintenue, par un détendeur hydraulique 210, connu en soi, au-dessus d'une valeur minimale prédéfinie.

Si la pression de l'accumulateur de compensation de fuites 209 vient à descendre au-dessous de ladite valeur minimale prédéfinie, le détendeur hydraulique 210 transfère du fluide hydraulique depuis l'accumulateur principal 204 vers ledit accumulateur de compensation de fuites 209 jusqu'à ce que la pression minimale prédéfinie soit atteinte dans ledit accumulateur de compensation de fuites 209.

Dans le cas ou les clapets anti-retour 185 sont placés au centre de la tige supérieure de vérin 10 des vérins de commande 8 dudit moteur, une chambre 184 est ménagée dans la culasse 113 des vérins de commande 8, ladite chambre étant directement connectée à l'accumulateur de compensation de fuites 209.

Cet agencement particulier permet d'ajouter, aux efforts d'inertie du moteur utilisés pour augmenter le taux de compression dudit moteur, un effort de poussée sur la tige supérieure de vérin 10 des vérins de commande 8 correspondant à la pression de l'accumulateur de compensation 209 multipliée par la section de ladite tige supérieure de vérin 10 des vérins de commande 8.

Cette configuration permet d'améliorer considérablement la vitesse du vérin de commande 8 lors des manoeuvres visant à augmenter le taux de compression du moteur.

Selon cette dernière configuration, la pression de sortie du détendeur hydraulique 210 qui régule la pression minimale de l'accumulateur de compensation 209 peut être asservie au taux de compression du moteur.

On note que l'accumulateur principal 204, l'accumulateur d'asservissement 206 et l'accumulateur de compensation 209 peuvent être à membrane et gaz comprimé ou à piston et ressort.

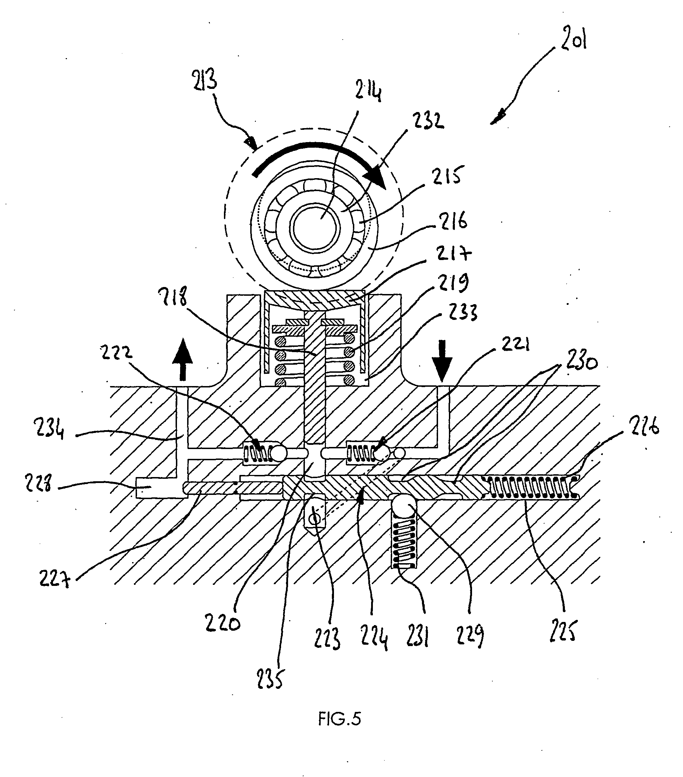

On a représenté en figure 5 un exemple de réalisation de la centrale hydraulique 200, dont le moteur électrique 202 qui actionne la pompe hydraulique 201 peut avantageusement être remplacé par une liaison mécanique 213.

Cette liaison mécanique 213 peut être constituée d'un excentrique 214 d'entraînement de pompe aménagé, par exemple, au bout de l'un des arbres à cames qui assure l'ouverture et la fermeture des soupapes du moteur.

L'excentrique 214 d'entraînement de pompe peut être muni d'un roulement 215 à billes ou à rouleaux comportant d'une part une cage intérieure 232 qui est montée sur ledit excentrique et d'autre part une cage extérieure 216 qui est maintenue en contact directement ou indirectement avec l'extrémité d'un piston 218 de la pompe hydraulique 201.

A cet effet, on note que la cage extérieure 216 du roulement 215 est maintenue en contact avec un poussoir de pompe 217 logé dans un alésage 233 et qui transmet son mouvement alternatif sinusoïdal au piston de pompe 218 de la pompe hydraulique 201.

La pompe hydraulique 201 est une pompe à piston radial unique 218 qui est actionné en translation selon son axe longitudinal, dans une direction par l'excentrique 214 d'entraînement de pompe et dans l'autre direction par un ressort de rappel 219.

Le piston de pompe 218, du fait de sa cinématique, fait continûment varier le volume d'une chambre de pompe 220 dans laquelle débouchent d'une part la sortie d'un clapet anti-retour d'admission 221 dont l'entrée est reliée au circuit de lubrification sous pression du moteur, et d'autre part l'entrée d'un clapet anti-retour de refoulement 222 dont la sortie est reliée à l'accumulateur principal 204.

La chambre de pompe 220 est également reliée au circuit de lubrification sous pression du moteur par un conduit 223 qui peut être obturé par un distributeur de décharge 224.

Le distributeur de décharge 224 peut être de forme cylindrique et peut se déplacer dans un alésage 225 selon un axe longitudinal sous l'effet de deux efforts antagonistes, ledit distributeur de décharge comportant au moins une gorge de passage du fluide 235.

Le premier effort est exercé sur l'une des extrémités du distributeur de décharge 224 par un ressort 226 et tend à maintenir ledit distributeur en position fermée.

Le second effort est d'intensité proportionnelle à la pression régnant dans l'accumulateur principal 204 et est exercé sur l'autre extrémité du distributeur de décharge 224 par une tige de transmission de pression 227 de forme cylindrique qui tend à maintenir ledit distributeur en position ouverte.

On note que la tige de transmission de pression 227 débouche dans une chambre de pression 228 reliée à l'accumulateur principal 204 au moyen d'un conduit 234. Une bille de verrouillage 229, ou tout autre moyen de verrouillage, vient coopérer avec des gorges de verrouillage 230 réalisées dans le corps du distributeur de décharge 224 afin de maintenir ledit distributeur en position pleinement ouverte ou pleinement fermée.

La bille de verrouillage 229 est maintenue dans l'une ou l'autre desdites gorges 230 par un ressort de verrouillage 231 qui exerce sur ladite bille de verrouillage 229 un effort tel que ladite bille ne peut sortir de l'une ou l'autre desdites gorges qu'au-delà d'un certain effort exercé sur ladite bille par le distributeur de décharge 224 lorsque ce dernier tend à se déplacer selon son axe longitudinal.

Lorsque le distributeur de décharge 224 est en position fermée, la pompe aspire l'huile en provenance du circuit de lubrification du moteur via son clapet d'admission 221 et la refoule vers l'accumulateur principal 204 via son clapet de refoulement 222.

Comme cela apparaît clairement sur la figure 5, lorsque le distributeur de décharge 224 est en position ouverte, la pompe est inopérante et ne produit plus aucun effet, le fluide hydraulique étant aspiré puis refoulé via le distributeur dans un seul et même canal c'est-à-dire, l'arrivée en provenance du circuit de lubrification du moteur.

Le tarage et la raideur des ressorts 226, 231 qui exercent une pression sur l'extrémité du distributeur de décharge 224 d'une part et sur la bille de verrouillage 229 d'autre part, ainsi que la section de la tige de transmission de pression 227 sont calculés de sorte que si la pression est insuffisante ou excessive dans l'accumulateur principal 204, l'équilibre des efforts est rompu entre celui exercé par ledit ressort de distributeur 226 sur ledit distributeur de décharge 224, celui exercé sur le même distributeur par la tige de transmission de pression 227 et celui exercé par la bille de verrouillage 229 qui tend à maintenir le distributeur de décharge 224 en position.

Dans le cas ou le distributeur de décharge 224 est en position ouverte et où la pression dans l'accumulateur principal 204 devient insuffisante, la bille de verrouillage 229 se lève et libère ledit distributeur qui vient automatiquement se mettre en position fermée. Ceci résulte du fait que l'effort exercé par la tige de transmission de pression 227 est devenu insuffisant pour contrer l'effort exercé par le ressort de distributeur 226 minoré de l'effort de retenue appliqué au distributeur de décharge 224 par la bille de verrouillage 229. La pompe hydraulique 201 alimente alors en fluide hydraulique l'accumulateur principal 204.

Dans le cas ou le distributeur de décharge 224 est en position fermée et ou la pression dans l'accumulateur principal 204 atteint sa valeur maximale recherchée, la bille de verrouillage 229 se lève et libère ledit distributeur qui vient automatiquement se mettre en position ouverte. Ceci résulte du fait que l'effort exercé par la tige de transmission de pression 227 est devenu supérieur à celui exercé par le ressort de distributeur 226 majoré de l'effort de retenue appliqué au distributeur de décharge 224 par la bille de verrouillage 229.

Selon cette disposition, le tarage et la raideur du ressort de verrouillage 231, le diamètre de la bille de verrouillage 229 et le profil des gorges de verrouillage 230 permettent de définir la pression minimale et la pression maximale qui seront automatiquement maintenues dans l'accumulateur principal 204 par la pompe hydraulique 201.

La pompe hydraulique 201 comprenant son poussoir 217, son piston 218, ses clapets 221, 222, son distributeur de décharge 224, sa bille de verrouillage 229 et sa tige de transmission de pression 227 peut constituer un ensemble fixé sur la culasse du moteur au bout de l'un des arbres à cames qui assurent l'ouverture et la fermeture des soupapes du moteur.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tout autre équivalent.

## Revendications

1. Dispositif presseur qui maintient les pistes de roulement (48, 160 à 165) des principaux composants mobiles (3, 5, 7, 40) d'un moteur à rapport volumétrique variable en permanence en contact entre elles ainsi qu'avec les faces sur lesquelles elles prennent appui dans un carter cylindre **caractérisé en ce qu'**il comprend des moyens de pression solidaires du carter cylindre (100), qui exercent un effort de pression sur une crémaillère de commande (7) comportant un secteur denté (75) constitué de dents (74) et **en ce que** l'effort de pression est appliqué sur une surface d'appui (78) aménagée sur ladite crémaillère (7) en sa partie inférieure, ladite surface d'appui (78) aménagée sur la crémaillère de commande (7) en sa partie inférieure étant placée suffisamment bas pour que l'effort résultant de l'effort tangentiel appliqué à la roue dentée (5) par l'organe de transmission (3) et de l'angle de pression des dentures (34, 74, 51, 52) d'une part, et des pistes de roulement (164 et 165) d'autre part, soit toujours situé au-dessus d'un point d'appui (P) des moyens de pression.

2. Dispositif presseur suivant la revendication 1, **caractérisé en ce que** le point d'appui (P) est situé en dessous du secteur denté (75) que comporte la crémaillère de commande (7)

3. Dispositif presseur suivant la revendication 1, **caractérisé en ce que** les moyens de pression sont constitués d'un ressort hélicoïdal logé dans la paroi interne du bloc-moteur (100).

4. Dispositif presseur suivant la revendication 1, **caractérisé en ce que** les moyens de pression sont constitués d'au moins une rondelle « Belleville » logée dans la paroi interne du bloc-moteur (100).

5. Dispositif presseur suivant la revendication 1, **caractérisé en ce que** les moyens de pression sont constitués d'un vérin presseur hydraulique (170) logé dans la paroi interne du bloc-moteur (100).

6. Dispositif presseur suivant la revendication 5, **caractérisé en ce que** le vérin presseur hydraulique (170) est une capsule hydraulique étanche constituée d'une membrane souple.

7. Dispositif presseur suivant la revendication 5, **caractérisé en ce que** le vérin presseur hydraulique (170) comporte un piston (171) évoluant dans un cylindre directement usiné dans le carter cylindre (100).

8. Dispositif presseur suivant la revendication 5, **caractérisé en ce que** le vérin presseur hydraulique (170) comporte un piston (171) évoluant dans une chemise cylindrique (172) rapportée dans le carter cylindre (100).

9. Dispositif presseur suivant la revendication 5, **caractérisé en ce que** le fond du cylindre du vérin presseur hydraulique (170) est constitué par le carter cylindre (100).

10. Dispositif presseur suivant la revendication 5, **caractérisé en ce que** le fond du cylindre du vérin presseur hydraulique (170) est un composant rapporté (173) vissé par l'extérieur du carter cylindre (100) dans ledit le carter cylindre (100).

11. Dispositif presseur suivant la revendication 5, **caractérisé en ce que** les chambres à huile (179) des différents vérins presseurs hydrauliques (170) que comporte le moteur sont reliées entre elles par des conduits réalisés dans la masse du carter cylindre (100).

12. Dispositif presseur suivant la revendication 5, **caractérisé en ce que** la pression régnant dans le vérin presseur hydraulique (170) est asservie aux conditions de fonctionnement du moteur au moyen d'une centrale hydraulique (200).

13. Dispositif presseur suivant la revendication 12, **caractérisé en ce que** la centrale hydraulique (200) est un ensemble autonome et indépendant pouvant être installé en un point quelconque du compartiment moteur du véhicule et qui est relié au moteur par au moins un conduit hydraulique souple.

14. Dispositif presseur suivant la revendication 12, **caractérisé en ce que** la centrale hydraulique (200) comporte au moins une pompe hydraulique (201).

15. Dispositif presseur suivant la revendication 12, **caractérisé en ce que** la centrale hydraulique (200) comporte au moins un accumulateur de pression (204, 206, 209).

16. Dispositif presseur suivant la revendication 12, **caractérisé en ce que** la centrale hydraulique comporte au moins une vanne électro-hydraulique (207, 208).

17. Dispositif presseur suivant la revendication 12, **caractérisé en ce que** la centrale hydraulique (200) comporte au moins une sonde (211) permettant de mesurer la pression.

18. Dispositif presseur suivant la revendication 12, **caractérisé en ce que** la centrale hydraulique (200) comporte au moins un contacteur (205) asservi à la pression.

19. Dispositif presseur suivant la revendication 12, **caractérisé en ce que** la centrale hydraulique (200) comporte au moins un détendeur hydraulique (210).

20. Dispositif presseur suivant la revendication 12, **caractérisé en ce que** la centrale hydraulique (200) comporte au moins un filtre à huile (212).

21. Dispositif presseur suivant la revendication 12, **caractérisé en ce que** la centrale hydraulique (200) est alimentée avec de l'huile provenant du circuit de lubrification du moteur.

22. Dispositif presseur suivant la revendication 15, **caractérisé en ce que** la centrale hydraulique (200) comporte un accumulateur principal (204) alimenté par la pompe hydraulique (201) et qui constitue une réserve d'huile sous haute pression.

23. Dispositif presseur suivant la revendication 15, **caractérisé en ce que** la centrale hydraulique (200) comporte un accumulateur d'asservissement (206) qui est relié au vérin presseur hydraulique (170) et dont la pression moyenne est asservie aux conditions de fonctionnement du moteur.

24. Dispositif presseur suivant la revendication 1, **caractérisé en ce que** la crémaillère de commande (7) dont la position verticale par rapport au bloc moteur (100) est pilotée par un dispositif de contrôle (12) comportant un vérin de commande (8) constitué d'une tige supérieure de vérin (10), d'une tige inférieure de vérin (16), d'un piston de vérin (13) et d'une tige de contrôle (20).

25. Dispositif presseur suivant les revendications 15 et 24, **caractérisé en ce que** la centrale hydraulique (200) comporte un accumulateur de compensation de fuites (209) qui est relié à un clapet anti-retour (185) du vérin de commande (8), ledit clapet (185) autorisant l'entrée du fluide hydraulique dans le corps du vérin de commande.

26. Dispositif presseur suivant la revendication 25, **caractérisé en ce que** le clapet anti-retour (185) du vérin de commande (8) est placé au centre de la tige supérieure (10) dudit vérin, l'entrée dudit clapet anti-retour (185) étant en communication avec une chambre (184) aménagée dans une culasse (113) dudit vérin de commande (8) et dans le prolongement de ladite tige supérieure (10), ladite chambre (184) étant reliée à l'accumulateur de compensation de fuites (209) par un conduit et la sortie dudit clapet anti-retour (185) étant reliée à un autre conduit (187) aménagé dans le piston de vérin (13) du vérin de commande (8) par lequel la tige de contrôle (20) traverse ledit piston.

27. Dispositif presseur suivant la revendication 26, **caractérisé en ce que** les différentes chambres (184) aménagées dans la culasse (113) des vérins de commande (8) d'un même moteur et dans le prolongement des tiges supérieures de vérin (10), sont reliées entre elles par des conduits réalisés dans la masse de ladite culasse (113).

28. Dispositif presseur suivant la revendication 26, **caractérisé en ce que** la chambre (184) aménagée dans la culasse (113) du vérin de commande (8) et dans le prolongement de la tige supérieure de vérin (10), est reliée à une autre chambre (186) réalisée au-dessus de la tige de contrôle (20) et dans la culasse (113) par l'intermédiaire d'un conduit aménagé dans la masse de ladite culasse (113).

29. Dispositif presseur suivant la revendication 24, **caractérisé en ce que** le piston de vérin (13) du vérin de commande (8) comporte une bague (180) dont la surface intérieure (181) épouse la forme sphérique dudit piston de vérin (13) et dont la surface extérieure (182) est cylindrique.

30. Dispositif presseur suivant la revendication 1, **caractérisé en ce que** les moyens de pression solidaires du carter cylindre (100) exercent un effort de pression sur la crémaillère de commande (7) par l'intermédiaire d'une rotule d'appui (150) par laquelle s'exerce l'effort de pression qui est appliqué sur la surface d'appui (78) aménagée sur ladite crémaillère (7) en sa partie inférieure.

31. Dispositif presseur suivant la revendication 1, **caractérisé en ce que** les moyens de pression solidaires du carter cylindre (100) comportent une butée réglable qui permet de régler le jeu maximal entre les pistes de roulement (48, 160 à 165) des principaux composants mobiles (3, 5, 7, 40) du moteur.

32. Dispositif presseur suivant la revendication 31, **caractérisé en ce que** la butée réglable est une pièce vissée dans le carter cylindre (100) qui est arrêtée en rotation.

33. Dispositif presseur suivant la revendication 14, **caractérisé en ce que** la pompe hydraulique (201) est une pompe à piston radial unique comportant un piston (218) qui est actionné en translation selon son axe longitudinal dans une direction par un excentrique (214) d'entraînement de pompe et dans l'autre direction par un ressort de rappel (219).

34. Dispositif presseur suivant la revendication 33, **caractérisé en ce que** l'excentrique d'entraînement de pompe (214) est aménagé à l'extrémité de l'un des arbres à cames qui assurent l'ouverture et la fermeture des soupapes du moteur.

35. Dispositif presseur suivant la revendication 33, **caractérisé en ce que** l'excentrique d'entraînement de pompe (214) comporte un roulement (215) à billes ou à rouleau dont la cage intérieure (232) est montée sur ledit excentrique et dont la cage extérieure (216) est en contact directement ou indirectement avec l'extrémité du piston de pompe (218).

36. Dispositif presseur suivant la revendication 33, **caractérisé en ce que** l'excentrique d'entraînement de pompe (214) agit sur le piston de pompe (218) par l'intermédiaire d'un poussoir (217) logé dans un alésage (233).

37. Dispositif presseur suivant les revendications 22 et 33, **caractérisé en ce que** la pompe à piston radial unique comporte une chambre de pompe (220) qui communique d'une première part avec la sortie d'un clapet anti-retour d'admission (221) dont l'entrée est reliée au circuit de lubrification sous pression du moteur, d'une seconde part avec l'entrée d'un clapet anti-retour de refoulement (222) dont la sortie est reliée à l'accumulateur principal (204), et d'une troisième part avec le circuit de lubrification sous pression du moteur par l'intermédiaire d'un conduit (223) qui peut être obturé par un distributeur de décharge (224).

38. Dispositif presseur suivant la revendication 37, **caractérisé en ce que** le distributeur de décharge (224) comporte au moins une gorge de passage du fluide (235), et peut se déplacer dans un alésage (225) selon son axe longitudinal, de manière que l'une des extrémités dudit distributeur coopère avec un ressort (226) qui tend à maintenir ledit distributeur en position fermée, tandis que l'autre extrémité dudit distributeur coopère avec une tige de transmission de pression (227) qui tend à maintenir ledit distributeur en position ouverte en exerçant un effort sur ledit distributeur, ledit effort étant proportionnel à la pression régnant dans l'accumulateur principal (204).

39. Dispositif presseur suivant la revendication 38, **caractérisé en ce que** la tige de transmission de pression (227) comporte une première extrémité qui est en contact avec le distributeur de décharge (244) et tend à le maintenir en position ouverte tandis que la seconde extrémité débouche dans une chambre de pression (228) reliée à l'accumulateur principal (204) au moyen d'un conduit (234).

40. Dispositif presseur suivant la revendication 38, **caractérisé en ce que** le distributeur de décharge (224) comporte un dispositif de verrouillage (229) qui coopère avec deux gorges de verrouillage (230) permettant respectivement de maintenir ledit distributeur en position pleinement ouverte ou pleinement fermée, ledit dispositif de verrouillage (229) étant maintenu dans l'une ou l'autre desdites gorges (230) par un ressort de verrouillage (231).

## Claims

1. Pressing device which maintains the raceways (48, 160 to 165) of the main moving components (3, 5, 7, 40) of a variable volumetric ratio engine permanently in contact with one another and with the faces on which they bear in a cylinder block, **characterized in that** it comprises pressure means secured to the cylinder block (100) that exert a pressure force on a control rack (7) comprising a toothed sector (75) consisting of teeth (74), and **in that** the pressure force is applied to a bearing surface (78) formed on said rack (7) in its lower portion, said bearing surface (78) formed on the control rack (7) in its lower portion being placed sufficiently low so that the force resulting from the tangential force applied to the toothed wheel (5) by the transmission member (3) and from the pressure angle of the toothings (34, 74, 51, 52) on the one hand, and from the raceways (164 and 165) on the other hand, is always situated above a bearing point (P) of the pressure means.

2. Pressing device according to Claim 1, **characterized in that** the bearing point (P) is situated below the toothed sector (75) belonging to the control rack (7).

3. Pressing device according to Claim 1, **characterized in that** the pressure means consist of a helical spring housed in the internal wall of the engine block (100).

4. Pressing device according to Claim 1, **characterized in that** the pressure means consist of at least one Belleville washer housed in the internal wall of the engine block (100).

5. Pressing device according to Claim 1, **characterized in that** the pressure means consist of a hydraulic pressing ram (170) housed in the internal wall of the engine block (100).

6. Pressing device according to Claim 5, **characterized in that** the hydraulic pressing ram (170) is a leaktight hydraulic capsule consisting of a flexible diaphragm.

7. Pressing device according to Claim 5, **characterized in that** the hydraulic pressing ram (170) comprises a piston (171) which moves in a cylinder directly machined into the cylinder block (100).

8. Pressing device according to Claim 5, **characterized in that** the hydraulic pressing ram (170) comprises a piston (171) which moves in a cylindrical sleeve (172) fitted into the cylinder block (100).

9. Pressing device according to Claim 5, **characterized in that** the bottom of the cylinder of the hydraulic pressing ram (170) is formed by the cylinder block (100).

10. Pressing device according to Claim 5, **characterized in that** the bottom of the cylinder of the hydraulic pressing ram (170) is an add-on component (173) bolted from outside the cylinder block (100) into said cylinder block (100).

11. Pressing device according to Claim 5, **characterized in that** the oil chambers (179) of the various hydraulic pressing rams (170) belonging to the engine are interconnected by ducts produced within the mass of the cylinder block (100).

12. Pressing device according to Claim 5, **characterized in that** the pressure prevailing in the hydraulic pressing ram (170) is slaved to the operating conditions of the engine by means of a hydraulic unit (200).

13. Pressing device according to Claim 12, **characterized in that** the hydraulic unit (200) is an autonomous and independent assembly which can be installed at any point of the engine compartment of the vehicle and which is connected to the engine by at least one flexible hydraulic duct.

14. Pressing device according to Claim 12, **characterized in that** the hydraulic unit (200) comprises at least one hydraulic pump (201).

15. Pressing device according to Claim 12, **characterized in that** the hydraulic unit (200) comprises at least one pressure accumulator (204, 206, 209).

16. Pressing device according to Claim 12, **characterized in that** the hydraulic unit comprises at least one electrohydraulic valve (207, 208).

17. Pressing device according to Claim 12, **characterized in that** the hydraulic unit (200) comprises at least one sensor (211) for measuring the pressure.

18. Pressing device according to Claim 12, **characterized in that** the hydraulic unit (200) comprises at least one contactor (205) slaved to the pressure.

19. Pressing device according to Claim 12, **characterized in that** the hydraulic unit (200) comprises at least one hydraulic relief valve (210).

20. Pressing device according to Claim 12, **characterized in that** the hydraulic unit (200) comprises at least one oil filter (212).

21. Pressing device according to Claim 12, **characterized in that** the hydraulic unit (200) is supplied with oil from the engine lubricating circuit.

22. Pressing device according to Claim 15, **characterized in that** the hydraulic unit (200) comprises a main accumulator (204) which is supplied by the hydraulic pump (201) and which constitutes a highpressure oil reserve.

23. Pressing device according to Claim 15, **characterized in that** the hydraulic unit (200) comprises a slave accumulator (206) which is connected to the hydraulic pressing ram (170) and the average pressure of which is slaved to the operating conditions of the engine.

24. Pressing device according to Claim 1, **characterized in that** the vertical position of the control rack (7) with respect to the engine block (100) is governed by a control device (12) comprising a control jack (8) consisting of an upper jack rod (10), of a lower jack rod (16), of a jack piston (13) and of a control rod (20).

25. Pressing device according to Claims 15 and 24, **characterized in that** the hydraulic unit (200) comprises a leak-compensating accumulator (209) which is connected to a nonreturn valve (185) of the control jack (8), said valve (185) allowing hydraulic fluid to enter the body of the control jack.

26. Pressing device according to Claim 25, **characterized in that** the nonreturn valve (185) of the control jack (8) is placed at the center of the upper rod (10) of said jack, the inlet of said nonreturn valve (185) being in communication with a chamber (184) formed in a cylinder head (113) of said control jack (8) and in the continuation of said upper rod (10), said chamber (184) being connected to the leak-compensating accumulator (209) by one duct and the outlet of said nonreturn valve (185) being connected to another duct (187) formed in the jack piston (13) of the control jack (8) through which the control rod (20) crosses said piston.

27. Pressing device according to Claim 26, **characterized in that** the various chambers (184) formed in the cylinder head (113) of the control jacks (8) of one and the same engine and in the continuation of the upper jack rods (10) are interconnected by ducts produced within the mass of said cylinder head (113).

28. Pressing device according to Claim 26, **characterized in that** the chamber (184) formed in the cylinder head (113) of the control jack (8) and in the continuation of the upper jack rod (10) is connected to another chamber (186) produced above the control rod (20) and in the cylinder head (113) by way of a duct formed within the mass of said cylinder head (113).

29. Pressing device according to Claim 24, **characterized in that** the jack piston (13) of the control jack (8) comprises a ring (180) of which the inner surface (181) matches the spherical shape of said jack piston (13) and of which the outer surface (182) is cylindrical.

30. Pressing device according to Claim 1, **characterized in that** the pressure means secured to the cylinder block (100) exert a pressure force on the control rack (7) by way of a bearing ball joint (150) through which is exerted the pressure force which is applied to the bearing surface (78) formed on said rack (7) in its lower portion.

31. Pressing device according to Claim 1, **characterized in that** the pressure means secured to the cylinder block (100) comprise an adjustable stop which makes it possible to adjust the maximum clearance between the raceways (48, 160 to 165) of the main moving components (3, 5, 7, 40) of the engine.

32. Pressing device according to Claim 31, **characterized in that** the adjustable stop is a part bolted into the cylinder block (100) that is locked against rotation.

33. Pressing device according to Claim 14, **characterized in that** the hydraulic pump (201) is a single radial piston pump comprising a piston (218) which is actuated translationally along its longitudinal axis in one direction by a pump drive eccentric (214) and in the other direction by a return spring (219).

34. Pressing device according to Claim 33, **characterized in that** the pump drive eccentric (214) is formed at the end of one of the camshafts which serve to open and close the valves of the engine.

35. Pressing device according to Claim 33, **characterized in that** the pump drive eccentric (214) comprises a ball bearing or roller bearing (215) of which the inner cage (232) is mounted on said eccentric and of which the outer cage (216) is directly or indirectly in contact with the end of the pump piston (218).

36. Pressing device according to Claim 33, **characterized in that** the pump drive eccentric (214) acts on the pump piston (218) by way of a tappet (217) housed in a bore (233).

37. Pressing device according to Claims 22 and 33, **characterized in that** the single radial piston pump comprises a pump chamber (220) which communicates, firstly, with the outlet of an intake nonreturn valve (221) of which the inlet is connected to the pressurized lubricating circuit of the engine, secondly, with the inlet of a delivery nonreturn valve (222) of which the outlet is connected to the main accumulator (204) and, thirdly, with the pressurized lubricating circuit of the engine by way of a duct (223) which can be closed off by a discharge distributor (224).

38. Pressing device according to Claim 37, **characterized in that** the discharge distributor (224) comprises at least one fluid passage groove (235), and can move in a bore (225) along its longitudinal axis such that one of the ends of said distributor cooperates with a spring (226) which tends to maintain said distributor in the closed position, while the other end of said distributor cooperates with a pressure transmission rod (227) which tends to maintain said distributor in the open position by exerting a force on said distributor, said force being proportional to the pressure prevailing in the main accumulator (204).

39. Pressing device according to Claim 38, **characterized in that** the pressure transmission rod (227) comprises a first end which is in contact with the discharge distributor (224) and tends to maintain it in the open position, while the second end terminates in a pressure chamber (228) connected to the main accumulator (204) by means of a duct (234).

40. Pressing device according to Claim 38, **characterized in that** the discharge distributor (224) comprises a locking device (229) which cooperates with two locking grooves (230) respectively enabling said distributor to be maintained in the fully open or fully closed position, said locking device (229) being maintained in one or other of said grooves (230) by a locking spring (231).

## Patentansprüche

1. Druckvorrichtung, die die Laufbahnen (48, 160 bis 165) der beweglichen Hauptbestandteile (3, 5, 7, 40) eines Motors mit variablem Verdichtungsverhältnis permanent in gegenseitigem Kontakt sowie in Kontakt mit den Seiten hält, auf denen sie in einem Zylindergehäuse aufliegen, **dadurch gekennzeichnet, dass** sie fest mit dem Zylindergehäuse (100) verbundene Druckeinrichtungen enthält, die eine Druckkraft auf eine Steuerzahnstange (7) ausüben, die einen aus Zähnen (74) bestehenden gezahnten Sektor (75) aufweist, und dass die Druckkraft auf eine an der Zahnstange (7) in ihrem unteren Bereich eingerichtete Auflagefläche (78) ausgeübt wird, wobei die an der Steuerzahnstange (7) in ihrem unteren Bereich eingerichtete Auflagefläche (78) tief genug angeordnet ist, damit die aus der auf das Zahnrad (5) vom Übertragungsorgan (3) angewendeten Tangentialkraft und dem Druckwinkel der Zahnungen (34, 74, 51, 52) einerseits und den Laufbahnen (164 und 165) andererseits resultierende Kraft sich immer oberhalb eines Auflagepunkts (P) der Druckeinrichtungen befindet.

2. Druckvorrichtung nach Anspruch 1, **dadurch gekennzeichnet, dass** der Auflagepunkt (P) sich unterhalb des gezahnten Sektors (75) befindet, den die Steuerzahnstange (7) aufweist.

3. Druckvorrichtung nach Anspruch 1, **dadurch gekennzeichnet, dass** die Druckeinrichtungen aus einer Schraubenfeder bestehen, die in der Innenwand des Motorblocks (100) untergebracht ist.

4. Druckvorrichtung nach Anspruch 1, **dadurch gekennzeichnet, dass** die Druckeinrichtungen aus mindestens einer Tellerfeder bestehen, die in der Innenwand des Motorblocks (100) untergebracht ist.

5. Druckvorrichtung nach Anspruch 1, **dadurch gekennzeichnet, dass** die Druckeinrichtungen aus einem hydraulischen Druckzylinder (170) bestehen, der in der Innenwand des Motorblocks (100) untergebracht ist.

6. Druckvorrichtung nach Anspruch 5, **dadurch gekennzeichnet, dass** der hydraulische Druckzylinder (170) eine dichte hydraulische Kapsel ist, die aus einer flexiblen Membran besteht.

7. Druckvorrichtung nach Anspruch 5, **dadurch gekennzeichnet, dass** der hydraulische Druckzylinder (170) einen Kolben (171) aufweist, der sich in einem Zylinder bewegt, der direkt in dem Zylindergehäuse (100)hergestellt ist.

8. Druckvorrichtung nach Anspruch 5, **dadurch gekennzeichnet, dass** der hydraulische Druckzylinder (170) einen Kolben (171) aufweist, der sich in einer zylindrischen Hülle (172) bewegt, die in das Zylindergehäuse (100) eingesetzt ist.

9. Druckvorrichtung nach Anspruch 5, **dadurch gekennzeichnet, dass** der Boden des Zylinders des hydraulischen Druckzylinders (170) aus dem Zylindergehäuse (100) besteht.

10. Druckvorrichtung nach Anspruch 5, **dadurch gekennzeichnet, dass** der Boden des Zylinders des hydraulischen Druckzylinders (170) ein angesetztes Bauteil (173) ist, das von außerhalb des Zylindergehäuses (100) in das Zylindergehäuse (100) geschraubt wird.

11. Druckvorrichtung nach Anspruch 5, **dadurch gekennzeichnet, dass** die Ölkammern (179) der verschiedenen hydraulischen Druckzylinder (170), die der Motor aufweist, miteinander durch Kanäle verbunden sind, die in der Masse des Zylindergehäuses (100) ausgebildet sind.

12. Druckvorrichtung nach Anspruch 5, **dadurch gekennzeichnet, dass** der im hydraulischen Druckzylinder (170) herrschende Druck den Betriebsbedingungen des Motors mittels einer Hydraulikzentrale (200) nachgeführt wird.

13. Druckvorrichtung nach Anspruch 12, **dadurch gekennzeichnet, dass** die Hydraulikzentrale (200) eine autonome und unabhängige Einheit ist, die an einem beliebigen Punkt des Motorraums des Fahrzeugs installiert werden kann und mit dem Motor über mindestens eine flexible Hydraulikleitung verbunden ist.

14. Druckvorrichtung nach Anspruch 12, **dadurch gekennzeichnet, dass** die Hydraulikzentrale (200) mindestens eine Hydraulikpumpe (201) aufweist.

15. Druckvorrichtung nach Anspruch 12, **dadurch gekennzeichnet, dass** die Hydraulikzentrale (200) mindestens einen Druckspeicher (204, 206, 209) aufweist.

16. Druckvorrichtung nach Anspruch 12, **dadurch gekennzeichnet, dass** die Hydraulikzentrale mindestens ein elektro-hydraulisches Ventil (207, 208) aufweist.

17. Druckvorrichtung nach Anspruch 12, **dadurch gekennzeichnet, dass** die Hydraulikzentrale (200) mindestens eine Sonde (211) aufweist, die die Druckmessung ermöglicht.

18. Druckvorrichtung nach Anspruch 12, **dadurch gekennzeichnet, dass** die Hydraulikzentrale (200) mindestens einen dem Druck nachgeführten Kontaktschalter (205) aufweist.

19. Druckvorrichtung nach Anspruch 12, **dadurch gekennzeichnet, dass** die Hydraulikzentrale (200) mindestens einen hydraulischen Druckminderer (210) aufweist.

20. Druckvorrichtung nach Anspruch 12, **dadurch gekennzeichnet, dass** die Hydraulikzentrale (200) mindestens ein Ölfilter (212) aufweist.

21. Druckvorrichtung nach Anspruch 12, **dadurch gekennzeichnet, dass** die Hydraulikzentrale (200) mit von einem Schmierkreis des Motors kommendem Öl gespeist wird.

22. Druckvorrichtung nach Anspruch 15, **dadurch gekennzeichnet, dass** die Hydraulikzentrale (200) einen Hauptspeicher (204) aufweist, der von der Hydraulikpumpe (201) gespeist wird und eine Hochdruckölreserve bildet.

23. Druckvorrichtung nach Anspruch 15, **dadurch gekennzeichnet, dass** die Hydraulikzentrale (200) einen Regelungsspeicher (206) aufweist, der mit dem hydraulischen Druckzylinder (170) verbunden ist und dessen mittlerer Druck den Betriebsbedingungen des Motors nachgeführt wird.

24. Druckvorrichtung nach Anspruch 1, **dadurch gekennzeichnet, dass** die senkrechte Stellung der Steuerzahnstange (7) bezüglich des Motorblocks (100) von einer Steuervorrichtung (12) gesteuert wird, die einen Steuerzylinder (8) aufweist, der aus einer oberen Zylinderstange (10), einer unteren Zylinderstange (16), einem Zylinderkolben (13) und einer Steuerstange (20) besteht.

25. Druckvorrichtung nach den Ansprüchen 15 und 24, **dadurch gekennzeichnet, dass** die Hydraulikzentrale (200) einen Leckkompensationsspeicher (209) aufweist, der mit einem Rückschlagventil (185) des Steuerzylinders (8) verbunden ist, wobei das Ventil (185) den Eintritt des Hydraulikfluids in den Körper des Steuerzylinders erlaubt.

26. Druckvorrichtung nach Anspruch 25, **dadurch gekennzeichnet, dass** das Rückschlagventil (185) des Steuerzylinders (8) in der Mitte der oberen Stange (10) des Zylinders angeordnet ist, wobei der Eingang des Rückschlagventils (185) mit einer Kammer (184) in Verbindung steht, die in einem Zylinderdeckel (113) des Steuerzylinders (8) und in der Verlängerung der oberen Stange (10) eingerichtet ist, wobei die Kammer (184) mit dem Leckkompensationsspeicher (209) durch einen Kanal verbunden ist, und der Ausgang des Rückschlagventils (185) mit einem anderen Kanal (187) verbunden ist, der in dem Zylinderkolben (13) des Steuerzylinders (8) eingerichtet ist, durch den die Steuerstange (20) den Kolben durchquert.

27. Druckvorrichtung nach Anspruch 26, **dadurch gekennzeichnet, dass** die verschiedenen im Zylinderdeckel (113) der Steuerzylinder (8) des gleichen Motors und in der Verlängerung der oberen Zylinderstangen (10) eingerichteten Kammern (184) miteinander durch Kanäle verbunden sind, die in der Masse des Zylinderdeckels (113) ausgebildet sind.

28. Druckvorrichtung nach Anspruch 26, **dadurch gekennzeichnet, dass** die im Zylinderdeckel (113) des Steuerzylinders (8) und in der Verlängerung der oberen Zylinderstange (10) eingerichtete Kammer (184) mit einer anderen Kammer (186), die oberhalb der Steuerstange (20) und im Zylinderdeckel (113) eingerichtet ist, über einen Kanal verbunden ist, der in der Masse des Zylinderdeckels (113) eingerichtet ist.

29. Druckvorrichtung nach Anspruch 24, **dadurch gekennzeichnet, dass** der Zylinderkolben (13) des Steuerzylinders (8) einen Ring (180) aufweist, dessen Innenfläche (181) sich der Kugelform des Zylinderkolbens (13) anpasst und dessen Außenfläche (182) zylindrisch ist.

30. Druckvorrichtung nach Anspruch 1, **dadurch gekennzeichnet, dass** die fest mit dem Zylindergehäuse (100) verbundenen Druckeinrichtungen über ein Auflage-Kugelgelenk (150) eine Druckkraft auf die Steuerzahnstange (7) ausüben, durch das die Druckkraft ausgeübt wird, die auf die Auflagefläche (78) angewendet wird, die auf der Zahnstange (7) in ihrem unteren Bereich eingerichtet ist.

31. Druckvorrichtung nach Anspruch 1, **dadurch gekennzeichnet, dass** die fest mit dem Zylindergehäuse (100) verbundenen Druckeinrichtungen einen einstellbaren Anschlag aufweisen, der es ermöglicht, das maximale Spiel zwischen den Laufbahnen (48, 160 bis 165) der beweglichen Hauptbestandteile (3, 5, 7, 40) des Motors einzustellen.

32. Druckvorrichtung nach Anspruch 31, **dadurch gekennzeichnet, dass** der einstellbare Anschlag ein in das Zylindergehäuse (100) eingeschraubtes Bauteil ist, das in Drehung arretiert ist.

33. Druckvorrichtung nach Anspruch 14, **dadurch gekennzeichnet, dass** die Hydraulikpumpe (201) eine Pumpe mit einem einzigen radialen Kolben ist, die einen Kolben (218) aufweist, der in Translationsbewegung gemäß seiner Längsachse in einer Richtung durch einen Pumpenantriebs-Exzenter (214) und in der anderen Richtung durch eine Rückstellfeder (219) betätigt wird.

34. Druckvorrichtung nach Anspruch 33, **dadurch gekennzeichnet, dass** der Pumpenantriebs-Exzenter (214) am Ende der einen der Nockenwellen eingerichtet ist, die das Öffnen und Schließen der Ventile des Motors gewährleisten.

35. Druckvorrichtung nach Anspruch 33, **dadurch gekennzeichnet, dass** der Pumpenantriebs-Exzenter (214) ein Kugellager (215) oder Kegelrollenlager aufweist, dessen innerer Käfig (232) auf den Exzenter montiert ist, und dessen Außenkäfig (216) direkt oder indirekt mit dem Ende des Pumpenkolbens (218) in Kontakt ist.

36. Druckvorrichtung nach Anspruch 33, **dadurch gekennzeichnet, dass** der Pumpenantriebs-Exzenter (214) auf den Pumpenkolben (218) mittels eines Schiebers (217) einwirkt, der in einer Bohrung (233) untergebracht ist.

37. Druckvorrichtung nach den Ansprüchen 22 und 33, **dadurch gekennzeichnet, dass** die Pumpe mit einzigem radialem Kolben eine Pumpenkammer (220) aufweist, die erstens mit dem Ausgang eines Einlass-Rückschlagventils (221), dessen Eingang mit dem unter Druck stehenden Schmierkreis des Motors verbunden ist, zweitens mit dem Eingang eines Druck-Rückschlagventils (222), dessen Ausgang mit dem Hauptspeicher (204) verbunden ist, und drittens mit dem Druckschmierkreis des Motors über einen Kanal (223) in Verbindung steht, der von einem Entladungsverteiler (224) verschlossen werden kann.

38. Druckvorrichtung nach Anspruch 37, **dadurch gekennzeichnet, dass** der Entladungsverteiler (224) mindestens eine Fluiddurchgangsrille (235) aufweist und sich in einer Bohrung (225) gemäß seiner Längsachse verschieben kann, so dass eines der Enden des Verteilers mit einer Feder (226) zusammenwirkt, die dahin tendiert, den Verteiler in der geschlossenen Stellung zu halten, während das andere Ende des Verteilers mit einer Druckübertragungsstange (227) zusammenwirkt, die dahin tendiert, den Verteiler in der offenen Stellung zu halten, indem sie eine Kraft auf den Verteiler ausübt, wobei die Kraft zum im Hauptspeicher (204) herrschenden Druck proportional ist.

39. Druckvorrichtung nach Anspruch 38, **dadurch gekennzeichnet, dass** die Druckübertragungsstange (227) ein erstes Ende aufweist, das mit dem Entladungsverteiler (244) in Kontakt ist und dahin tendiert, ihn in der offenen Stellung zu halten, während das zweite Ende in eine Druckkammer (228) mündet, die mittels eines Kanals (234) mit dem Hauptspeicher (204) verbunden ist.

40. Druckvorrichtung nach Anspruch 38, **dadurch gekennzeichnet, dass** der Entladungsverteiler (224) eine Entriegelungsvorrichtung (229) aufweist, die mit zwei Verriegelungsrillen (230) zusammenwirkt, die es ermöglichen, den Verteiler in der ganz offenen bzw. ganz geschlossenen Stellung zu halten, wobei die Verriegelungsvorrichtung (229) durch eine Verriegelungsfeder (231) in der einen oder anderen der Rillen (230) gehalten wird.
